## Europäisches Patentamt
## European Patent Office
## Office européen des brevets

(11) Veröffentlichungsnummer: **0 202 516**
A2

(12) # EUROPÄISCHE PATENTANMELDUNG

(21) Anmeldenummer: 86106006.9

(22) Anmeldetag: 02.05.86

(51) Int. Cl.⁴: **B 01 D 53/04**

(30) Priorität: 22.05.85 DE 3518367

(43) Veröffentlichungstag der Anmeldung:
26.11.86 Patentblatt 86/48

(84) Benannte Vertragsstaaten:
BE DE FR GB IT NL

(71) Anmelder: Linde Aktiengesellschaft
Abraham-Lincoln-Strasse 21
D-6200 Wiesbaden(DE)

(72) Erfinder: Rohde, Wilhelm
Forstenrieder Allee 20
D-8000 München 71(DE)

(72) Erfinder: Koch, Hannsjörg, Dipl.-Ing.
Heiglstrasse 24
D-8190 Wolfratshausen(DE)

(72) Erfinder: Metschl, Michael
Saalangerstrasse 52
D-8122 Penzberg(DE)

(74) Vertreter: Schaefer, Gerhard, Dr.
Linde Aktiengesellschaft Zentrale Patentabteilung
D-8023 Höllriegelskreuth(DE)

(54) Adsorbereinheit.

(57) Vorgeschlagen wird eine Adsorbereinheit mit zwei in einem gemeinsamen Gehäuse angeordneten Adsorberbetten. Das obere, im wesentlichen senkrecht angeordnete Adsorberbett wird in horizontaler Richtung durchströmt. Das darunter liegende zweite Adsorberbett fällt von einem oberen Scheitelpunkt mit zunehmendem Abstand von einer vertikalen Mittelachse nach unten ab.

EP 0 202 516 A2

0202516

## Adsorbereinheit

Die Erfindung betrifft eine Adsorbereinheit mit zwei in einem gemeinsamen Gehäuse angeordneten Adsorberbetten, von denen ein erstes von im wesentlichen senkrecht angeordneten, einander gegenüberliegenden, gasdurchlässigen Wänden umschlossen ist, so daß sich im Adsorberbett eine im wesentlichen horizontale Gasströmung ausbilden kann, und wobei ein zweites Adsorberbett unterhalb des ersten Adsorberbetts angeordnet ist.

Bei der gleichzeitigen adsorptiven Abtrennung von zwei oder mehr Komponenten aus einem Gasstrom ist es üblich, für verschiedene, unterschiedlich stark adsorbierbare Komponenten oder Gruppen von Komponenten unterschiedliche Adsorberbetten vorzusehen. Bei der Beladung des zuvor regenerierten Adsorptionsmittels bildet sich innerhalb eines Adsorberbetts für jede Komponente eine Adsorptionsfront aus, die in Abhängigkeit von der relativen Adsorbierbarkeit unterschiedlich schnell voranschreitet. Weniger stark adsorbierbare Komponenten, deren Adsorptionsfront schneller voranschreitet als die der stärker adsorbierbaren Komponenen, brechen nicht nur früher

-.-

durch das Adsorberbett durch, d.h. treten im nicht adsorbierten Produktstrom auf, sondern werden in der Regel auch von stärker adsorbierbaren Komponenten beim Voranschreiten der diesen Komponenten zugeordneten Adsorptionsfront wieder aus dem Adsorberbett verdrängt. Dadurch bilden sich beim beladenen Adsorber verschiedene Zonen aus, die mit den verschiedenen Komponenten beladen sind. Durch geeignete Dimensionierung lassen sich so Adsorbereinheiten mit verschiedenen Betten konstruieren, in denen bei vollständiger Beladung in den einzelnen Betten im wesentlichen nur eine Komponente bzw. eine Gruppe von Komponenten adsorbiert sind. Die Unterteilung der Adsorbereinheit in verschiedene Betten kann aus mehreren Gründen zweckmäßig sein, beispielsweise aus Gründen der Raumaufteilung oder im Hinblick auf eine günstige Verfahrensführung bei der Regeneration der beladenen Adsorberbetten.

Aus der DE-OS 33 42 447 ist bereits eine Adsorbereinheit der eingangs genannten Art bekannt, die beispielsweise für die Trocknung und Abtrennung von Kohlendioxid aus Luft oder für die Reinigung bzw. Zerlegung von Erdgas, wobei Wasser und Kohlenwasserstoffe abgetrennt werden sollen, geeignet ist. In der DE-OS 33 42 447 werden zwei verschiedene Ausführungen der Adsorbereinheit vorgeschlagen, wobei das zweite Adsorberbett einmal als vertikale Verlängerung des ersten Adsorberbetts, die nur durch eine Trennwand vom ersten Adsorberbett getrennt ist, und einmal als horizontal angeordnetes separates Bett ausgeführt ist. Diese bekannten Konstruktionen weisen jedoch einige Nachteile auf: Bei der senkrechten Anordnung in Verlängerung des ersten Adsorberbetts ergibt sich zwar ein gewünschter großer Querschnitt des Adsorberbetts, durch den Druckverluste des zu reinigenden bzw. zu zerlegenden Gases gering gehalten werden können, doch eine separate Auswechslung des Adsorptionsmittels in nur einem der Adsorberbetten ist nicht möglich. Noch schwerwiegender ist ein weiterer Nachteil, der beispielsweise bei der Trocknung feuchter Gase auftritt, wenn im unteren Adsorberbett Wasser adsorbiert wird. Bei der üblicherweise auf thermischem Wege erfolgenden Regenerierung durch Überleiten eines heißen Gases im Gegenstrom zur Adsorptionsrichtung tritt dann ein heißer Regeneriergasstrom in das obere Adsorberbett ein, gibt seine Wärme zunächst an die Schüttung im oberen Adsorberbett ab und tritt anschließend abgekühlt durch das untere Adsorberbett hindurch und am Regeneriergasaustritt aus. Nach einiger Zeit ist die Wärmewelle bis ins untere Bett vorgedrungen,in welcher Wasser adsorbiert ist, und das Regeneriergas mit erhöhter Temperatur nimmt Wasser auf. In der nachfolgenden Zone der Adsorptionsmittelschüttung, die noch kalt ist, kühlt sich das angefeuchtete Regeneriergas ab und es entsteht tropfenförmiges Wasser, welches durch Schwerkraft nach unten, also senkrecht zur Strömungsrichtung des Gases, fließt. Dies bedeutet für das untere Adsorberbett, daß sich bei sparsamer Regenerierung, also bei möglichst geringem Einsatz an Heizenergie, nach mehreren Zyklen im unteren Teil des Adsorberbetts mehr und mehr Wasser ansammeln kann. Um dies zu verhindern, muß mit erhöhter Regenerierenergie, die auf die unteren Zonen abgestimmt ist, regeneriert werden.

Dieser negative Effekt tritt zwar nicht bei der horizontalen Anordnung des unteren Betts auf, doch weist auch diese bekannte Konstruktion einige Nachteile auf. Einerseits ist es erforderlich, bei einer horizontalen Anordnung des unteren bzw. zweiten Adsorberbetts die Schüttung des Adsorptionsmittels einzuspannen, um beim Durchströmen eine Verwirbelung zu vermeiden. Damit ist

- 4 -                    0202516

das Befüllen dieses Adsorberbettes mit Adsorptionsmittel und insbesondere das Auswechseln von verbrauchtem Adsorptionsmittel mit großem Aufwand verbunden. Da außerdem bei einer derartigen Anordnung des unteren Adsorberbettes in der Regel nur ein kleinerer Querschnitt des Adsorberbetts zur Verfügung steht als bei senkrechter Anordnung, müssen entweder kürzere Zykluszeiten in Kauf genommen werden oder die Schichtdicke und damit der Druckverlust des zu reinigenden bzw. zu zerlegenden Gases erhöht werden.

Der Erfindung liegt die Aufgabe zugrunde, eine Adsorbereinheit der eingangs genannten Art so auszugestalten, daß die obengenannten Nachteile nicht auftreten und daß während einer Adsorptionsphase ein Betrieb mit geringem Druckverlust möglich ist und daß die Regenerierung mit geringem Energieaufwand betrieben werden kann.

Diese Aufgabe wird dadurch gelöst, daß das zweite Adsorberbett so angeordnet ist, daß es einen in einer vertikalen Mittelachse liegenden oberen Scheitelpunkt aufweist und mit zunehmendem Abstand von der Mittelachse nach unten abfällt, wobei die abfallenden Flanken mindestens teilweise von gasdurchlässigen Wänden umschlossen sind.

Die erfindungsgemäße Ausgestaltung der Adsorbereinheit sieht ein zweites Adsorberbett vor, das weder horizontal noch senkrecht angeordnet ist. Statt dessen ist es mit einer (gegebenenfalls variablen) Neigung zwischen einem zentralen höchsten Punkt und einem unteren Randbereich im Gehäuse angeordnet. Diese Bauweise ermöglicht eine kompakte und raumsparende Anordnung des Adsorptionsmittels. Weiterhin bietet sie die Möglichkeit, das Adsorptionsmittel des zweiten, unteren

-.-

Adsorberbetts in einfacher Weise auszuwechseln, da im Bereich der Abstützung am Gehäuse für diesen Zweck einfach verschließbare Abzugrohre vorgesehen werden können. Das Befüllen des zweiten Adsorberbetts mit neuem Adsorptionsmittel erfolgt zweckmäßig über ein Befüllungsrohr, das vom oberen Bereich des Gehäuses zum Scheitelpunkt des zweiten Adsorberbetts führt. Durch die geneigte Bauweise rutscht eingefülltes Adsorptionsmittel sicher in das Adsorberbett ein und füllt ohne zusätzliche, bei waagerecht angeordneten Adsorberbetten nötigen Glättigungseinrichtungen zu einer gleichmäßigen und vollständigen Füllung des zweiten Adsorberbetts.

In zweckmäßiger Weiterbildung der erfindungsgemäßen Adsorbereinheit weist das zweite Adsorberbett im Bereich der abfallenden Flanken eine im wesentlichen konstante Schichtdicke auf, um eine gleichmäßige Durchströmung der Flanken vom zu reinigenden bzw. zu zerlegenden Gas sowie vom Regeneriergas zu gewährleisten.

Das zweite Adsorberbett kann von beliebiger Gestalt sein und beispielsweise als Halbkugel oder als Halbellipsoid ausgebildet sein. Aus Gründen der konstruktiven Einfachheit ist es in vielen Fällen bevorzugt, daß das zweite Adsorberbett einen im wesentlichen keilförmigen vertikalen Querschnitt aufweist.

Auch im horizontalen Querschnitt kann das zweite Adsorberbett in beliebiger Weise gestaltet sein und dem Gehäusequerschnitt angepaßt sein. Da das Gehäuse in den meisten praktischen Fällen ein vertikaler zylindrischer Behälter ist, bietet sich in vielen Fällen eine rotationssymmetrische Anordnung des zweiten Adsorberbetts um eine vertikale Mittelachse als besonders günstig an.

-.-

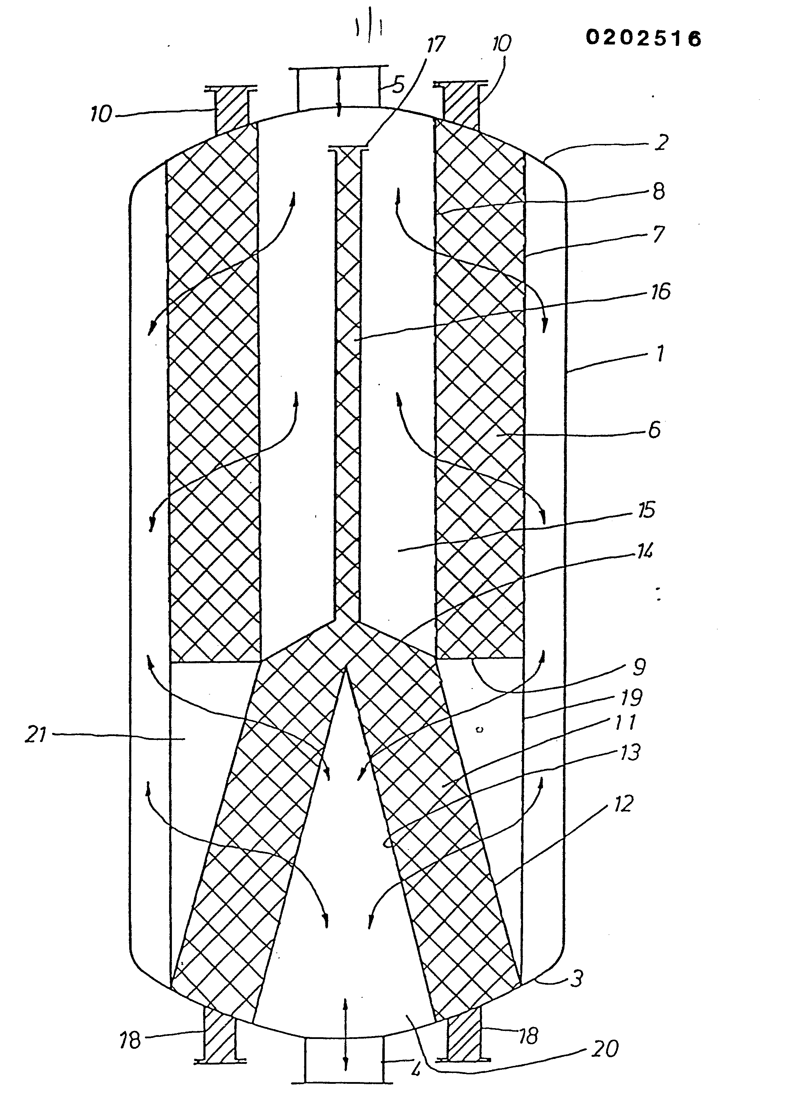

Weitere Einzelheiten der Erfindung werden nachfolgend anhand eines in der Figur schematisch dargestellten Ausführungsbeispiels erläutert.

Die in der Figur dargestellte Adsorbereinheit ist innerhalb eines Gehäuses angeordnet, das aus einem senkrecht stehenden zylindrischen Mantel 1, einem oberen gewölbten Boden 2 und einem unteren gewölbten Boden 3 besteht. Der untere gewölbte Boden 3 ist mit einem zentralen Anschlußstutzen 4 für den Eintritt von zu reinigendem Gas bzw. für den Austritt von Regeneriergas ausgestattet. Ebenso enthält der obere gewölbte Boden 2 einen zentral angeordneten Stutzen 5 für den Abzug von nicht adsorbierter Produktkomponente bzw. für die Zufuhr von Regeneriergas.

Im oberen Bereich des Gehäuses befindet sich ein erstes Adsorberbett 6, das mit dem oberen gewölbten Boden 2 gasdicht verbunden ist. Es erstreckt sich in ringförmiger Anordnung konzentrisch zum zylindrischen Mantel 1 und wird von vertikalen, gasdurchlässigen Wänden 7 und 8 sowie von einer gasundurchlässigen unteren Trennwand 9 begrenzt. Im gewölbten Boden 2 sind in dem Bereich, in dem das Adsorberbett 6 anliegt, verschließbare Stutzen 10 für die Befüllung des Adsorberbetts 6 mit Adsorptionsmittel vorgesehen. Durch diese Stutzen 10 wird im Falle eines Auswechselns von Adsorptionsmittel auch das verbrauchte Adsorptionsmittel wieder abgezogen, was beispielsweise durch Absaugen erfolgen kann.

Unterhalb des Adsorberbetts 6 befindet sich ein zweites Adsorberbett 11. Dieses Adsorberbett 11 stützt sich auf dem unteren gewölbten Boden 3 ab und ist von schräg verlaufenden, gasdurchlässigen Wänden 12, 13 begrenzt. Die innere Begrenzungswand 13 bildet im wesentlichen einen rotationssymmetrischen, zentral im zylindrischen Mantel 1 angeordneten Kegel. Die äußere Wand 12 umschließt den von der inneren Wand 13 gebildeten Kegel durch einen konzentrisch dazu verlaufenden Kegelstumpf, der an die Nahtstelle zwischen der unteren Trennwand 9 und der gasdurchlässigen Wand 8 des oberen Adsorberbetts endet.

Das untere Adsorberbett 11 wird durch gasdichte Trennwände 14 vom Innenraum 15 des oberen Adsorberbetts abgetrennt. Ein zentrales Rohr 16 führt vom Scheitelpunkt des unteren Adsorberbetts 11 in den oberen Bereich des Gehäuses und endet kurz unterhalb des gewölbten Bodens 2 unterhalb des Stutzens 5 in einem Blindflansch 17. Durch Öffnen des Blindflanschs 17 kann über das Rohr 16 leicht Adsorptionsmittel in das untere Adsorberbett 11 eingeschüttet werden. Zur Entnahme von verbrauchtem Adsorptionsmittel sind im Bereich des unteren gewölbten Bodens 3 verschließbare Stutzen 18 im Bereich der Auflagefläche des Adsorberbetts 11 vorgesehen.

Die gasdurchlässige Wand 7 des oberen Adsorberbetts 6 ist aus Gründen der mechanischen Stabilität über den Bereich des Adsorberbetts 6 hinaus verlängert und läuft als gasdurchlässige zylindrische Stützwand 19 konzentrisch zum Mantel 1 durch das Gehäuse und stützt sich am unteren gewölbten Boden 3 ab.

Die Wirkungsweise der erfindungsgemäßen Adsorbereinheit sei am Beispiel einer Luftreinigung erläutert, wie sie beispielsweise vor einer Tieftemperaturzerlegung der Luft stattfindet. Bei der Vorreinigung werden Feuchtigkeit und Kohlendioxid sowie gegebenenfalls vorhandene Kohlenwasserstoffe aus der Luft entfernt.

In einer Adsorptionsphase wird die Luft der Adsorbereinheit über den Stutzen 4 zugeführt. Im unteren Adsorberbett 11, das ein Trocknungsgel oder ein Molekularsieb enthält, wird im wesentlichen die Feuchtigkeit aus der Luft adsorbiert. Das Gas tritt dabei aus dem von der Wand 13 begrenzten kegelförmigen Raum 20 in einen von den Wänden 12, 7 und 9 sowie dem Mantel 1 begrenzten Ringraum 21 ein und durchströmt danach das obere Adsorberbett 6 in horizontaler Richtung, um schließlich nach Sammlung im inneren Raum 15 über den Stutzen 5 im oberen gewölbten Boden abgezogen zu werden. Das obere Adsorberbett 6 enthält ein zeolithisches Molekularsieb zur Entfernung von Kohlendioxid sowie gegebenenfalls von Kohlenwasserstoffen.

Wenn nach längerer Betriebszeit, beispielsweise nach 6 bis 12 Stunden, die Adsorbereinheit beladen ist, wird in einem zweiten Verfahrenstakt die Luftzufuhr abgeschaltet und ein Regeneriergas, beispielsweise Stickstoff, im Gegenstrom zur bisherigen Strömungsrichtung über den Stutzen 5 zugeführt. Das Regeneriergas durchströmt zuerst das obere Adsorberbett 6, wobei es Kohlendioxid und die gegebenenfalls vorhandenen Kohlen-wasserstoffe gasförmig aufnimmt. Anschließend durch-strömt es das untere Adsorberbett 11 und nimmt dort die Feuchtigkeit auf. Schließlich wird das austretende Regeneriergas über den Stutzen 4 abgezogen. Sofern im unteren Adsorberbett 11 bei der Regenerierung ein Teil der desorbierten Feuchtigkeit in noch nicht erwärmten Schichten des Adsorptionsmittels wieder kondensiert, fließt die dabei gebildete Flüssigkeit auf einer relativ kurzen Strecke zum Austrittsende des Adsorberbetts 11, also zur gasdurchlässigen Wand 13 und kann dort leicht abfließen. Ein das Adsorptionsmittel schädigender Stau von Wasser innerhalb des Adsorberbetts 11 tritt dabei nicht auf, sofern der Öffnungs-winkel des von der Wand 13 umschlossenen Kegels nicht zu gering ist, insbesondere, wenn dieser Öff-nungswinkel mindestens 20 ° beträgt.

Die erfindungsgemäße Adsorbereinheit kann bei einer Vielzahl von Adsorptionsverfahren eingesetzt werden. Wegen der kompakten Bauweise eignet sie sich insbesondere dort, wo aufgrund hoher Gasdurchsätze ansonsten Probleme mit Baugrößen von Adsorbern auftreten können. Beispielsweise müssen vor großen Tieftemperatur-Luftzerlegungsanlagen Gasmengen von mehreren 100 000 Nm$^3$/h adsorptiv gereinigt werden. Um die Adsorber mit technisch sinnvollen Zykluszeiten betreiben zu können, ist es dabei beispielsweise erforderlich, Adsorber einzusetzen, die eine Bauhöhe von beispielsweise 12 m und einen Durchmesser von beispielsweise 5 m aufweisen und die typischerweise ein Volumen der Adsorptionsbetten von etwa 100 Nm$^3$ aufweisen, wobei beispielsweise für das untere, mit Wasser zu beladende Adsorberbett 6 bis zu 1/3 des gesamten Volumens anzusetzen ist.

Patentansprüche

1. Adsorbereinheit mit zwei in einem gemeinsamen Gehäuse angeordneten Adsorberbetten, von denen ein erstes von im wesentlichen senkrecht angeordneten, einander gegenüberliegenden gasdurchlässigen Wänden umschlossen ist, so daß sich im Adsorberbett eine im wesentlichen horizontale Gasströmung ausbilden kann und wobei ein zweites Adsorberbett unterhalb des ersten Adsorberbetts angeordnet ist, dadurch gekennzeichnet, daß das zweite Adsorberbett so angeordnet ist, daß es einen in einer vertikalen Mittelachse liegenden oberen Scheitelpunkt aufweist und mit zunehmendem Abstand von der Mittelachse nach unten abfällt, wobei die abfallenden Flanken mindestens teilweise von gasdurchlässigen Wänden umschlossen sind.

2. Adsorbereinheit nach Anspruch 1, dadurch gekennzeichnet, daß das zweite Adsorberbett im Bereich der abfallenden Flanken eine im wesentlichen konstante Schichtdicke aufweist.

3. Adsorbereinheit nach Anspruch 1 oder 2, dadurch gekennzeichnet, daß das zweite Adsorberbett einen im wesentlichen keilförmigen Querschnitt aufweist.

4. Adsorbereinheit nach einem der Ansprüche 1 bis 3, dadurch gekennzeichnet, daß das zweite Adsorberbett rotationssymmetrisch um eine vertikale Mittelachse angeordnet ist.

5. Adsorbereinheit nach einem der Ansprüche 1 bis 4, dadurch gekennzeichnet, daß das erste Adsorberbett in Form eines Ringzylinders, dessen Inneres mit einer Einrichtung zur Gaszuführung bzw. Gasableitung in Verbindung steht, ausgebildet ist und koaxial zu dem zweiten Adsorberbett angeordnet ist.

6. Adsorbereinheit nach einem der Ansprüche 1 bis 5, dadurch gekennzeichnet, daß vom Scheitelpunkt des zweiten Adsorberbetts ein Befüllungsrohr durch das Innere des ersten Adsorberbetts in den oberen Bereich des gemeinsamen Gehäuses führt.

7. Adsorbereinheit nach einem der Ansprüche 1 bis 6, dadurch gekennzeichnet, daß aus dem unteren Bereich des zweiten Adsorberbetts ein Abzugsrohr durch das Gehäuse führt.

-.-